# EUROPEAN PATENT SPECIFICATION

(11) **EP 3 189 899 B1**
(45) Date of publication and mention of the grant of the patent: **15.07.2020**
(21) Application number: 14901322.9
(22) Date of filing: 02.09.2014
(51) Int. Cl.: B05C 3/10, B05D 1/20, B82Y 30/00

(54) **DEVICE FOR PRODUCING NANOSTRUCTURED COATINGS ON A SOLID SURFACE**
VORRICHTUNG ZUR HERSTELLUNG NANOSTRUKTURIERTER BESCHICHTUNGEN AUF EINER FESTEN OBERFLÄCHE
DISPOSITIF POUR PRODUIRE DES REVÊTEMENTS NANOSTRUCTURÉS SUR UNE SURFACE SOLIDE

(43) Date of publication of application: 12.07.2017
(73) Proprietor: Obshchestvo s Ogranichennoy Otvetstvennostyu "Izovac Technologies", Minsk, 220040 (BY)
(72) Inventor: SHIRIPOV, Vladimir Jakolevich, Minskij Region 223054 (BY); ZHAVNERKO, Henadzi Konstantinovich, Minsk 220131 (BY)
(74) Representative: Sloboshanin, Sergej
(86) International application number: PCT/BY2014/000007
(87) International publication number: WO 2016/033674

(56) References cited:
- EP-A1- 0 169 031
- EP-A2- 0 183 426
- EP-A2- 0 386 962
- WO-A1-2008/006211
- BY-C1- 15 411
- US-A- 4 093 757
- US-A- 4 093 757
- US-A- 4 722 856
- US-A- 5 429 842
- US-A- 5 512 326

## Description

The invention is related to the instruments and apparatus intended for formation of mono- and multilayer Langmuir-Blodgett (LB) films of surfactants (SA) on a solid surface, which are to be used in the high-technology manufacturing of electronic products, components of molecular electronics and other devices, the operation of which is based on quantum-size effects.

The device can be used for creating functional composite coatings with specified architecture and controllable number of layers when manufacturing the wear-resistant coatings, photonic crystals, ultrafine insulating and conducting films, passivating and protective coatings, sensor layers, anisotropic optical coatings, interference and polarisation light filters, etc.

At present, there are some well-known devices for formation of the Langmuir-Blodgett films. Such devices consist of a vessel referred to as the LB trough containing a liquid (sub-phase), surface linear barriers mounted with the possibility of motion along the trough edges, sensor for measuring the superficial tension (superficial pressure) in a monolayer and a holder for moving of the substrates [1]. As a rule, the device is mounted on an antivibration base.

The Langmuir-Blodgett method consists in the formation of a solid monomolecular layer at the interface and transferring of this layer onto the substrate surface.

For this purpose, a certain volume of the film-forming substance solution in volatile solvent is spread onto the sub-phase surface. After evaporation of the solvent, a tenuous monomolecular film of SA is formed on the water surface and the molecules in this film are oriented by the process of compression of barriers until a solid film with close packing of molecules is obtained.

In such a device, monolayers are transferred onto the substrate (surface modification) due to vertical movement of the substrate through the monolayer so that the pressure in the film is kept constant in the deposition process due to automatic compression of the surface with a monolayer by linear barriers by the value proportional to the modified substrate area.

The described device does not ensure the defect-free quality of the modifying layer that is caused by the aggregation of the compound in the meniscus of the liquid when the latter is in contact with the vertically oriented substrate; here the choice of the SA suitable for forming defect-free coatings is limited and the size of the surface area to be modified does not exceed a few tens of square centimetres that is determined by the size of the substrate immersion zone.

Besides, it is impossible to organise continuous deposition process by means of the described device because of cyclic nature of the process of spreading new portions of film-forming SA onto the liquid suface.

The device [2] ensuring the continuous process of deposition of the monomolecular SA film onto the substrate located on a tape base is also known. The said device consists of a Teflon cuvette, rotating cylindrical barrier dividing the trough into two compartments, two superficial tension sensors, automated dispenser and tape-transport mechanism consisting of three rolls, onto which a flexible tape-type polymeric substrate is fastened. Here one of the rolls is immersed into the sub-phase.

The principle of operation of this device consists in filling the trough with the working liquid and the SA from the dispenser is spread into the compartment without the tape-transport mechanism (spreading compartment).

After evaporation of the solvent from the water surface, amphiphilic molecules are transferred into the compartment with the tape-transport mechanism (deposition compartment) and organised into a monolayer by rotation of the cylindrical barrier. Once the superficial pressure in the substance deposition compartment reaches the value corresponding to the ordered state of the monolayer, the tape-transport mechanism allowing the substrate to be passed through the SA layer switched on automatically.

The continuity of the process of deposition of the monolayer is achieved by synchronisation of rotation of the cylindrical barrier with spreading of the SA molecules from the dispenser and operation of the tape-transport mechanism, motions of which are under feedback control by the superficial tension sensors.

The disadvantages of the known device consist in impossibility to modify the solid planar surfaces with the size exceeding hundreds of square centimetres in a continuous process. Besides, this device does not provide for automatic deposition of solid substrates at a small angle relatively to the liquid level that also affects the quality of the coatings deposited adversely.

The description of device for formation of the mono- and multilayer films of amphiphile compounds [3] is the closest one to the invention claimed as to the technical essence.

The known device has a modular design and comprises the units allowing the coatings to be formed on a solid surface by both the standard LB technique and the horizontal deposition method. In the last case, the substrate is placed on a special holder into the trough with the working liquid allowing the substrate to be held horizontally and the sub-phase is drained by a special draining facility. This device comprises the substrate surface activation unit designed as a rotating platform with the holders of the vessels with the working solutions for dipping of the substrates.

The substrate surface is activated prior to formation of the LB film on it by the vertical method consisting in alternating absorption of oppositely charged compounds such as, for example, polymers, polyelectrolytes, proteins and nanoparticles from the solutions.

The above mentioned device comprises also two superficial tension sensors and two linear Teflon barriers designed with the possibility of motion over the working liquid surface, automated microdispenser for spreading the substance solution onto the working liquid (sub-phase) surface, removable tape-transport mechanism performing the substrate-moving facility function and rotating cylindrical barrier that makes it possible to obtain the monomolecular films of amphiphile compounds on the substrates as well as to form the alternating layers of different amphiphile substances.

However, the described device has the following disadvantages: it is impossible to modify the solid planar surface of significant size; the rotating cylindrical barrier is fixed that makes it impossible to regulate the level of its immersion in case of change of the working liquid level. The fixation of the cylindrical barrier is a critical weakness impeding the implementation of the continuous coating-deposition process. When implementing such a process, it is necessary to organise the transfer of the SA molecules from the zone for deposition of the compound onto water surface to that for deposition the monolayer, i.e. the molecules or composition of the particles shall be adsorbed on the surface of the rotating cylindrical barrier from the side of the deposition compartment and easily desorbed onto the water surface in the compartment for deposition.

However, when the cylindrical barrier rotation axis is located above the working liquid level, the liquid meniscus can become negative from the side of the deposition compartment. In this case, the molecules will adhere to the rotating barrier that will cause the additional adsorption of the substances on the cylindrical barrier surface and carry-over of the monolayer substance from the side of the deposition compartment. In such a case, no constancy of the specified properties of the obtained coatings will be ensured.

From US 4,093,757 is known a method for producing and depositing a monomolecular layer of amphiphilic molecules on a substrate. The monomolecular layer is first formed from a solution of amphiphilic molecules by introduction of the solution on a liquid surface which is divided into at least two compartments by at least one rotatable and partly immersed horizontal member. The solvent is then removed and the horizontal member is driven in rotation to apply a predetermined pressure to said layer as this latter is transferred from one compartment to the next, the layer being finally deposited on a substrate.

WO 2008/006211 A1 refers to a method and apparatus for controlling the thickness of a thin film or thin layer of discrete particles or of an heterogeneous mixture. According to said method, the interfacial tension forces between the solution or suspension and its environment are used as the driving forces to evenly spread the solution, suspension or mixture while the solvent evaporates and/or dilutes.

From US 5,429,842 is known a process for continuous production of an ultrathin, ordered layer of amphiphilic molecules on a surface of a polar liquid. According to the process, a directed flow of the polar liquid is produced in a duct which contains the amphiphilic molecules in dissolved or undissolved form on the surface in spread form. In the duct, a duct section having a relatively high flow rate on the surface and comprising a ramp which is arranged at the bottom of the duct and washed over by the polar liquid is provided. This is followed by a duct section having a relatively low flow rate on the surface, in which the flow is dammed up at an obstacle at a liquid level constant with time, so that an ultrathin, ordered layer of amphiphilic molecules is continuously formed in these duct sections at the polar liquid/air interface by compression of the flow. The washed over ramp is movable.

EP 0 386 962 relates to an apparatus and to a methos for making ultra-thin self-assembling molecular films. The film is made by delivering a substantially continuous curtain of film-forming solution containing amphiphilic molecules to a surface of an aqueous liquid, confining the film-forming solution against movement in all but one direction along the said surface, whereby the film-forming solution solidifies into a self-assembling molecular fluid membrane in which the molecules are ordered and arranged in aligned units that are themselves oriented relative to one another in two directions generally parallel to the said surface.

EP 0 183 426 discloses a barrier assembly for a Langmuir trough which is arranged for a substrate to be carried automatically to-and-fro on a dipping head over a fixed barrier into monomolecular layers A, B on a common subphase so as to stack layers ABABAB on the substrate. The layers A, B are confined by the barrier and two constant perimeter areas formed by a single flexible band passing over rollers. By adjusting the positions of bridges that carry some of the rollers, the confined areas can be contracted to compress the layers A, B.

The objective of the proposed invention consists in the development of a device providing for the continuous process of formation of the functional coatings with the specified physical and chemical characteristics with ensuring their long-term stability and wear-resistance while the products are in using.

The set objective is attained by the additional equipment of the device for formation of the nanostructured coatings on solid surfaces comprising the process trough to be filled with the working liquid, draining facility; at least, one automated device for spreading the SA solution onto the working liquid surface in the form of monolayer, facility for moving the substrates and deposition of them through the monolayer at an angle relatively to the horizontal plane, two linear barrier located along the opposite trough sides with the possibility of movement in the horizontal plane and the rotatable cylindrical barrier, the axis of which is parallel to the working liquid surface and the said linear barriers, installed between the said linear barriers; two superficial tension sensors, substrate surface activation unit and electronic control unit with at least one heat exchanger, the system for cleaning the working liquid and maintaining its specified level, and working liquid feeding device; moreover, the cylindrical barrier is installed with the possibility of its movement vertically so that its axis is located below the working liquid level.

To ensure the optimum operation of the device, the bottom surface of the trough is made with a slope and linear barriers are installed with the possibility of their movement vertically.

Besides, the cylindrical barrier is made of chemically inert materials chosen, for example, from the groups of fluoroplastics, polyethylketones, polymethylenoxides, and the device for spreading the SA solution onto the working liquid surface is designed as an aerosol microdispenser.

In this case, the substrate-moving facility can be designed as a belt conveyor or in the form of at least two sections of transport rollers, each section being provided with an autonomous stepping motor for rotating the rollers.

In the proposed device, the substrate activation unit is designed as a set of process elements intended for performing the activation of the substrate surface by physical methods, for example, in a low-temperature plasma, and the system for cleaning the working liquid and maintaining its specified level in the trough comprises the liquid level sensor and the hermetic seal.

The developed design of the device provides for obtaining the high-quality functional coatings in a continuous process of modification of the substrates.

Thus, the claimed device makes it possible to improve the evenness and uniformity of the coatings being obtained that improves considerably the stability of their physical and chemical characteristics and other properties while being in service along with ensuring high productivity.

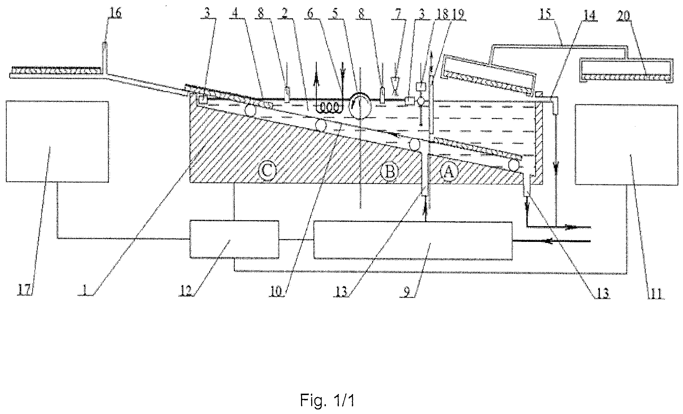

The invention essence is explained by the drawing with the schematic presentation of the device.

The device comprises the process trough 1 with the working liquid 2, two linear barriers 3 for cleaning the working liquid surface from the monolayer 4, the cylindrical barrier 5 installed with the possibility of its rotation and movement vertically, heat exchanger 6 for cooling the working liquid located under the monolayer, automated device 7 for spreading the SA solution onto the working liquid surface in the form of monolayer, two sensors 8 for measuring the superficial tension in the monolayer, system 9 for cleaning the working liquid and maintaining its specified level in the process trough, fixture 10 for moving the substrates and deposition them through the monolayer, substrate surface activation unit 11, electronic control unit 12, facilities 13, 14 for feeding and draining the working liquid, respectively, modules 15, 16 for loading and unloading the substrates, respectively, zone 17 for unloading the substrates, liquid level sensor 18, hermetic seal 19 and substrates 20.

The process trough 1, the inner bottom surface of which is made with a slope, is mounted on an antivibration base (not shown in the figure) and filled with the working liquid 2 (sub-phase). The two linear barriers 3 located along the opposite sides of the trough are installed with the possibility of their movement in the horizontal plane over the working liquid surface for cleaning the same and in the vertical plane for unimpeded deposition of the substrates 20 through the monolayer 4. The cylindrical barrier 5 is installed between the linear barriers with the possibility of rotation. The design of the cylindrical barrier is free of rigid fixation of the same in the vertical position. The cylindrical barrier rotation axis is parallel to the working liquid surface 2 and to the above linear barriers 3. The cylindrical barrier is made of chemically inert materials chosen, for example, from the classes of fluoroplastics, polyetherketones or polymethylenoxides.

The linear and cylindrical barriers divide the working surface in the process trough into three functional zones: zone A for automatic loading of the substrates, zone B for spreading the substances and zone C for forming and deposition the monolayer.

Zone C comprises the heat exchanger 6, which allows the working liquid 2 to be cooled directly below the monolayer 4. The automated device 7 for spreading the SA solution onto the surface of the working liquid 2 in the form of monolayer 4 is located in Zone B. The two sensors 8 for measuring the superficial tension are located in zones B and C to fix the changes in the superficial tension when spreading the compound solution and deposition the monolayer.

The system 9 for cleaning the working liquid and maintaining its specified level is connected with the working liquid in the trough by means of the feedback system through the liquid level sensor 18 and device 13 for feeding the working liquid and 14 for draining the same, which make it possible to maintain the specified level of the working liquid 2 in the process of dipping and withdrawing the substrates 20.

The hermetic seal 19 is intended for maintaining the level of the working liquid 2 in zones B and C constant at the moment of loading the substrates. The system 9 comprises the system for pre-cleaning of the working liquid, after which the liquid is fed into the process trough through the device 13 for feeding the working liquid.

The controllable fixture 10 for feeding the substrates 20 and deposition them through the monolayer 4 allows the substrates 20 to be moved from the loading zone A into the zone C for deposition the monolayer at an angle relatively to the horizontal plane.

The device comprises the unit 11 for activation of the substrates 20 to give them the hydrophilic properties, for example, by treatment of them with atmospheric plasma. In the unit 11, the surface of the substrates can be activated due to formation of a reactive layer from the series including such functional groups as -OH, -CHO, -COOH, -NH₂, -NHNH₂, -N=C=O, etc. as well as molecules, for example, biothin.

The electronic control unit 12 with the PC and software where the electronic control is organised with the help of a flexible set of modules ensures the process of loading the substrates, formation and deposition of the monolayer as well as the transfer and withdrawing of the modified substrates.

The fixture 10 intended for feeding the substrates 20 is designed using known solutions and can be, for example, a belt conveyor, onto which the substrates in the holders or without them are placed or sectional system of independent transport rollers, which are driven by the motors and carry the substrates in the substrate holders.

The modules 15 and 16 for loading and unloading the substrates 20 provide for feeding and withdrawing the substrates from the process trough into the zone 17 for unloading the substrates, from which they are transported further in accordance with the general process flow diagram.

The device makes it possible to ensure the improvement of the quality of the formed coatings, because the design implements the continuous process of modification of the planar surfaces with automated inclined withdrawing of the substrates, which minimises the distortion of the monolayer structure. The design features of the moving facility and unit responsible for forming the closely-packed monolayer make it possible to not only obtain the coatings, which are more uniform in comparison with those obtained using the prototype, but also proceed to industrial-scale production and modification of large areas with ordered layers of functional coatings with high productivity.

The described device operates as follows.

Every substrate 20 is firstly placed into the substrate surface activation unit 11. The activation is performed in the low-temperature plasma of the dielectric barrier (DB) discharge at the atmospheric pressure. The unit 11 for activation of the substrate surfaces consists of the medium-frequency generator, array of probe electrodes, flat electrode and system for linear movement of the probe electrodes over the substrate surface being treated.

The substrate is placed onto the flat electrode, AC voltage from the generator is applied between the flat electrode and array of probe electrodes, DB discharge is ignited, water vapour steam is fed into the discharge burning zone, the moving system is started and the array of probe electrodes is moved over the surface being treated to activate the latter. The device makes it possible to generate the DB discharge with the specific power Ws = 10 W/cm² at the AC frequency of *f* = 14 kHz. Thus, the substrate surface is activated in the unit 11 due to formation of a reactive sublayer from the OH groups.

The substrates with the activated surface are placed into the substrate holder designed as a tray so that each substrate would be fixed at least at four points.

The working liquid 2 (ultrapure deionized water) is fed into the zone B of the process trough 1 after passing through membranes, which filter out the mechanical impurities, solid particles and biological-origin objects and de-ionizing system based on ion-exchange materials. The filters and de-ionising system constitute a part of the system 9 for cleaning the working liquid and maintaining its specified level. The process trough 1 is filled with the working liquid 2 from the system 9 through the device 13 for feeding the working liquid into the process trough, which is a system of valves, flow meters, filling and draining pipes and connected with the liquid level sensor 18. The working liquid draining device 14, the design of which is similar to that of the device 13 is connected with the sub-phase temperature and pH sensors (not shown in the drawing), which also constitute a part of the system 9.

When the readings of the sensors fall outside the range specified through the electronic control unit 12, the discharge valves of the device 14 are opened for draining the liquid and de-ionised water with the specified pH value is fed through the device 13 into the process trough 1 to replace the used liquid. If necessary, the working liquid is cooled to the specified temperature by means of the heat exchanger 6. The water circulation in the claimed device continues until the required temperature and pH values are reached.

The two movable linear barriers 3 are moved over the water surface before the process of formation of the monolayer 4 in zones B and C for applying the substance solution and releasing the monolayer while reducing the area of the water surface for pre-cleaning the latter. Then the barriers 3 are moved apart and lifted above the working liquid level.

Then the SA solution is sprayed in the aerosol form onto the working liquid surface 2 in the zone B through microvalves of the four-point distribution system of the automated device 7. After evaporation of the solvent from the working liquid surface, the monolayer 4 is formed and moved from the zone B by the rotating cylindrical barrier 5 into the zone C. Since the cylindrical barrier 5 is designed with the possibility of vertical movement, the optimum height of the barrier portion projecting over the working liquid surface is selected. In so doing the cylindrical barrier rotation axis is always located below the working liquid that is critical in the continuous process of modification of the surfaces. The barrier 5 shall move continuously the SA from the zone B into the zone C in the production cycle. Therewith, the SA molecules are adsorbed on the hydrophylic surface of the cylindrical barrier made of chemically inert fluoroplastic on the side of the zone B and easily desorbed onto the water surface in the zone C, because the hydrophylic surface ensures the full wetting of the surface of the cylindrical barrier 5 that just causes the molecules to "disconnect" from the rotating cylindrical barrier in the monolayer release zone C, where the ordered layer of the functional material, the monolayer 4, is formed in such a way on the working liquid surface.

The substrates 20 with activated surface are moved by means of the substrate loading module 15 from the activation unit 11 to the gas-liquid interface into the zone A of the process trough 1. The substrate holder with the substrates is dipped into the working liquid 2 by means of the module 15 onto the fixture 10 intended for feeding the substrates with preserving the properties of the activated surface at the molecular level.

The fixture 10 for feeding the substrates consists of four separate sections of the driving transportation rollers. The rollers in each section are driven by individual stepping motor that makes it possible to vary their rotational speed for each section and carry out the process of moving the substrate holders in such a way.

The zone A is separated from the main volume of the process trough by the hermetic seal 19 which closed hermetically the compartment of the zone A at the moment of loading the substrates. The displaces working liquid is drained through the device 14 intended for draining the working liquid and located in the side wall of the process trough in the zone A, after that the compartment is opened and the substrates 20 are moved into the monolayer deposition zone C.

The continuous monitoring of the surface pressure in the monolayer 4 is exercised by means of two sensors 8. Once the surface pressure corresponding to the ordered state of the monolayer 4 in the zone C, the device receives the signal from the control unit 12 to the fixture 10 and the substrate holders with the substrates are moved through the ordered monolayer.

The substrates are transferred under the "gas-liquid" interface at the distance and speed excluding the possibility of appearance of the surface wave destructing the structure of the monolayer 4. The substrates are withdrawn by means of the moving fixture 10 through the "gas-liquid" interface in the zone C. The substrates are withdrawn at an angle of 3-30 degrees relatively to the horizontal plane that ensures free draining of the liquid from the substrate surface with the activated layer and fixation of the monolayer deposited onto the substrate surface due to its interaction with the reactive sub-layer.

After withdrawing of the substrates from the process trough by the unloading module 16, the substrates are moved into the unloading zone 17, from where they are transported further in accordance with the general process flow diagram.

During deposition of the monolayer, the drop of the level of the working liquid 2 due to withdrawing of the substrate holder with the substrates 20 is compensated by adding the working liquid from the system 9 into the zone B through the device 13 for feeding the working liquid.

The continuity of the process of deposition of the monolayer 4 is provided by synchronous spraying of the SA in the zone B, continuous transportation of the material of the monolayer from the zone B into the zone C by means of the rotating cylindrical barrier 5 and the information on the superficial tension in the monolayer 4, which are received from the two sensors 8, and operation of the substrate feeding fixture 10.

The coordination of all the stages of the modifying process is ensured by means of the electronic control unit 12 as follows: loading/unloading of the substrates 20, formation and deposition of the monolayer 4 on the surface of the liquid 2 as well as movement of the substrates in the process trough 1 and with drawning of them in the modifying process.

Thus, the claimed device makes it possible to provide for obtaining the high-quality functional surfaces with the specified physical and chemical characteristics in the continuous process of modification of the substrates with ensuring the long-term stability and wear-resistance of the obtained coatings while the products are in use.

### Information sources:

1. M.V. Kovalchuk, V.V. Klechkovskaya, L.A. Feigin Langmuir-Blodgett Molecular Constructor//Nature, No.11. - Moscow: 2003. P. 11-19.
2. Patent SU873869 published on 15.10.1981.
3. Patent BY No.15411 published on 30.08.2010.

## Claims

1. Device for obtaining nanostructured coatings on solid surfaces comprising
a process trough (1) to be filled with a working liquid (2),
a draining facility (14),
at least one automated device (7) for spreading surfactant solution onto the working liquid (2) surface in the form of a monolayer (4),
a facility (10) for moving substrates (20) and their deposition through the monolayer (4) at an angle relative to a horizontal plane,
two linear barriers (3) located along the opposite trough sides with the possibility of movement in a horizontal plane, and
a rotatable cylindrical barrier (5), the axis of which is parallel to the working liquid (2) surface and the linear barriers (3), installed between the said linear barriers (3),
two superficial tension sensors (8),
a substrate surface activation unit (11) and
an electronic control unit (12),
**characterized by**
additionally introduced at least one heat exchanger (6) being configured to cool the working liquid (2) directly below the monolayer (4),
a system (9) for cleaning the working liquid (2) and maintaining its specified level, wherein the two linear barriers (3) are adapted for cleaning the working liquid (2) surface from the monolayer, and
a working liquid feeding device (13);
wherein the cylindrical barrier (5) is installed with the possibility of its vertical movement such that its axis is located below the working liquid level,
wherein the angle relative to a horizontal plane at which the substrates (20) are withdrawn is in the range of 3 to 30 degrees,
wherein the linear barriers (3) and the cylindrical barrier (5) divide the working liquid (2) surface in the process trough into a zone (A) for automatic loading of the substrates (20), a zone (B) for spreading the surfactant solution and a zone (C) for forming and deposition the monolayer (4)
wherein the device is adapted for continuous processing of the substrate coating.

2. Device of Claim 1, wherein the inner bottom surface of the process trough (1) is made with a slope.

3. Device of Claim 1, wherein the linear barriers (3) are installed with the possibility of vertical movement.

4. Device of Claim 1, wherein the cylindrical barrier (5) is made of chemically inert materials chosen, for example, from the groups of fluoroplastics, polyetherketones or polymethylenoxides.

5. Device of Claim 1, wherein the device (7) for spreading surfactant solution onto the working liquid surface is made in the form of an aerosol microdispenser.

6. Device of Claim 1, wherein the substrate moving facility (10) is made as a belt conveyor.

7. Device of Claim 1, wherein the substrate moving facility (10) is made as at least two sections of transport rollers, each section being provided with an autonomous stepping motor.

8. Device of Claim 1, wherein the substrate surface activation unit (11) is configured to perform the activation of the substrate surface by a low-temperature plasma.

9. Device of Claim 1, wherein the system (9) for cleaning the working liquid and maintaining its specified level in the trough (1) comprises a liquid level sensor (18).

10. Device of Claim 9, wherein the system (9) for cleaning the working liquid and maintaining its specified level in the trough (1) comprises a hermetic seal (19), wherein the hermetic seal (19) separates the zone (A) for automatic loading of the substrates (20) from the zone (B) for spreading the surfactant solution and the zone (C) for forming and deposition the monolayer (4).

11. Device according to one of the Claims 1 to 10, wherein the device is further comprising a loading module (15) for moving the substrates (20) from the substrate surface activation unit (11) into zone (A) of the process trough (1).

## Patentansprüche

1. Vorrichtung zum Erhalt nanostrukturierter Beschichtungen auf festen Oberflächen, umfassend
eine Verarbeitungswanne (1) zum Befüllen mit einer Arbeitsflüssigkeit (2),
eine Abflusseinrichtung (14),
wenigsten eine automatisierte Vorrichtung (7) zum Versprühen einer Oberflächenlösung auf die Oberfläche der Arbeitsflüssigkeit (2) in Form einer Monolage (4),
eine Einrichtung (10) zum Bewegen von Substraten (20) und ihre Verschiebung durch die Monolage (4) in einem Winkel zu einer waagerechten Ebene,
zwei lineare Schranken (3), angeordnet entlang entgegengesetzter Seiten der Wanne mit der Möglichkeit zur Bewegung in einer waagerechten Ebene, und
eine drehbare zylindrische Schranke (5), deren Achse parallel zu der Oberfläche der Arbeitsflüssigkeit (2) und der linearen Schranken (3) ist, die zwischen den genannten linearen Schranken (3) angebracht ist,
zwei Oberflächenspannungssensoren (8),
eine Einheit (11) zur Aktivierung der Substratoberfläche und
eine elektronische Steuerungseinheit (12),
**gekennzeichnet durch**
wenigstens einen zusätzlich eingebrachten Wärmetauscher (6), der zum Kühlen der Arbeitsflüssigkeit (2) direkt unterhalb der Monolage (4) vorgesehen ist,
ein System (9) zum Reinigen der Arbeitsflüssigkeit (2) und zum Aufrechterhalten ihres bestimmten Niveaus, wobei die zwei linearen Schranken (3) zum Reinigen der Oberfläche der Arbeitsflüssigkeit (2) von der Monolage (4) ausgelegt sind, und
eine Vorrichtung (13) zum Einbringen einer Arbeitsflüssigkeit;
wobei die zylindrische Schranke (5) mit der Möglichkeit ihrer senkrechten Bewegung derart angebracht ist, dass ihre Achse unterhalb des Niveaus der Arbeitsflüssigkeit angeordnet ist,
wobei der Winkel zu einer waagerechten Ebene, bei dem die Substrate (20) entnommen werden, im Bereich von 3 bis 30 Grad liegt,
wobei die linearen Schranken (3) und die zylindrische Schranke (5) die Oberfläche der Arbeitsflüssigkeit (2) in der Verarbeitungswanne (1) in eine Zone (A) zum automatischen Laden der Substrate (20), eine Zone (B) zum Versprühen der Oberflächenlösung und eine Zone (C) zum Formen und Verschieben der Monolage (4) teilen,
wobei die Vorrichtung für eine kontinuierliche Verarbeitung der Substratbeschichtung ausgelegt ist.

2. Vorrichtung nach Anspruch 1, wobei die Oberfläche des Innenbodens der Verarbeitungswanne (1) mit einer Neigung ausgebildet ist.

3. Vorrichtung nach Anspruch 1, wobei die linearen Schranken (3) mit der Möglichkeit einer senkrechten Bewegung angebracht sind.

4. Vorrichtung nach Anspruch 1, wobei die zylindrische Schranke (5) aus chemisch inerten Materialen gefertigt ist, ausgewählt zum Beispiel aus der Gruppe von Fluorokunststoffen, Polyetherketonen oder Polymethylenoxiden.

5. Vorrichtung nach Anspruch 1, wobei die Vorrichtung (7) zum Versprühen einer Oberflächenlösung auf die Oberfläche der Arbeitsflüssigkeit (2) in Form eines Aerosolmikrodispensers gefertigt ist.

6. Vorrichtung nach Anspruch 1, wobei die Substratbewegungseinrichtung (10) in Form eines Förderbandes gefertigt ist.

7. Vorrichtung nach Anspruch 1, wobei die Substratbewegungseinrichtung (10) in Form wenigstens zweier Abschnitte von Transportwalzen gefertigt ist, wobei jeder Abschnitt mit einem autonomen Schrittmotor versehen ist.

8. Vorrichtung nach Anspruch 1, wobei die Einheit (11) zur Aktivierung der Substratoberfläche zum Durchführen der Aktivierung der Substratoberfläche mittels eines Niedertemperatur-Plasmas vorgesehen ist.

9. Vorrichtung nach Anspruch 1, wobei das System (9) zum Reinigen der Arbeitsflüssigkeit und zum Aufrechterhalten ihres bestimmten Niveaus in der Wanne (1) einen Flüssigkeitsniveausensor (18) umfasst.

10. Vorrichtung nach Anspruch 9, wobei das System (9) zum Reinigen der Arbeitsflüssigkeit (2) und zum Aufrechterhalten ihres bestimmten Niveaus in der Wanne (1) einen luftdichten Verschluss (19) umfasst, wobei der luftdichte Verschluss (19) die Zone (A) zum automatischen Laden der Substrate (20) von der Zone (B) zum Versprühen der Oberflächenlösung und der Zone (C) zum Formen und Verschieben der Monolage (4) trennt.

11. Vorrichtung nach einem der Ansprüche 1 bis 10, wobei die Vorrichtung ferner ein Lademodul (15) zum Bewegen der Substrate (20) von der Einheit (11) zur Aktivierung der Substratoberfläche in die Zone (A) der Verarbeitungswanne (1) umfasst.

## Revendications

1. Dispositif destiné à obtenir des revêtements nanostructurés sur des surfaces solides comprenant
une cuve de traitement (1) à remplir avec un liquide de travail (2),
une installation de drainage (14),
au moins un dispositif automatisé (7) destiné à propager une solution de tensioactif sur la surface de liquide de travail (2) sous la forme d'une monocouche (4),
une installation (10) destinée à déplacer des substrats (20) et à les déposer à travers la monocouche (4) selon un angle par rapport à un plan horizontal,
deux barrières linéaires (3) situées le long des côtés de cuve opposés avec la possibilité de mouvement dans un plan horizontal, et
une barrière cylindrique rotative (5), dont l'axe est parallèle à la surface de liquide de travail (2) et aux barrières linéaires (3), installée entre lesdites barrières linéaires (3),
deux capteurs de tension superficielle (8),
une unité d'activation de surface de substrat (11) et
une unité de commande électronique (12),
**caractérisé par**
introduit de manière additionnelle au moins un échangeur de chaleur (6) qui est configuré pour refroidir le liquide de travail (2) directement en dessous de la monocouche (4),
un système (9) destiné à nettoyer le liquide de travail (2) et à maintenir son niveau spécifié, dans lequel les deux barrières linéaires (3) sont adaptées pour nettoyer la surface de liquide de travail (2) et éliminer la monocouche, et
un dispositif d'alimentation en liquide de travail (13) ;
dans lequel la barrière cylindrique (5) est installée avec la possibilité de son mouvement vertical de telle sorte que son axe est situé en dessous du niveau de liquide de travail,
dans lequel l'angle par rapport à un plan horizontal auquel les substrats (20) sont retirés se situe dans la plage de 3 à 30 degrés,
dans lequel les barrières linéaires (3) et la barrière cylindrique (5) divisent la surface de liquide de travail (2) dans la cuve de traitement en une zone (A) destinée à un chargement automatique des substrats (20), une zone (B) destinée à propager la solution de tensioactif et une zone (C) destinée à former et à déposer la monocouche (4),
dans lequel le dispositif est adapté pour un traitement continu du revêtement de substrat.

2. Dispositif selon la revendication 1, dans lequel la surface inférieure interne de la cuve de traitement (1) est réalisée avec une déclivité.

3. Dispositif selon la revendication 1, dans lequel les barrières linéaires (3) sont installées avec la possibilité de mouvement vertical.

4. Dispositif selon la revendication 1, dans lequel la barrière cylindrique (5) est réalisée avec des matériaux inertes choisis, par exemple, parmi les groupes des plastiques fluorés, des polyéthercétones ou des oxydes de polyméthylène.

5. Dispositif selon la revendication 1, dans lequel le dispositif (7) destiné à propager une solution de tensioactif sur la surface de liquide de travail est réalisé sous la forme d'un microdistributeur d'aérosol.

6. Dispositif selon la revendication 1, dans lequel l'installation de déplacement de substrat (10) est réalisée en tant que convoyeur à bande.

7. Dispositif selon la revendication 1, dans lequel l'installation de déplacement de substrat (10) est réalisée en tant qu'au moins deux sections de roulettes de transport, chaque section étant dotée d'un moteur pas à pas autonome.

8. Dispositif selon la revendication 1, dans lequel l'unité d'activation de surface de substrat (11) est configurée pour mener à bien l'activation de la surface de substrat par un plasma à basse température.

9. Dispositif selon la revendication 1, dans lequel le système (9) destiné à nettoyer le liquide de travail et à maintenir son niveau spécifié dans la cuve (1) comprend un capteur de niveau de liquide (18).

10. Dispositif selon la revendication 9, dans lequel le système (9) destiné à nettoyer le liquide de travail et à maintenir son niveau spécifié dans la cuve (1) comprend un joint d'étanchéité hermétique (19), dans lequel le joint d'étanchéité hermétique (19) sépare la zone (A) destinée à un chargement automatique des substrats (20) de la zone (B) destinée à propager la solution de tensioactif et de la zone (C) destinée à former et à déposer la monocouche (4).

11. Dispositif selon l'une des revendications 1 à 10, dans lequel le dispositif comprend en outre un module de chargement (15) destiné à déplacer les substrats (20) à partir de l'unité d'activation de surface de substrat (11) jusque dans la zone (A) de la cuve de traitement (1).
